# EUROPÄISCHE PATENTANMELDUNG

(11) **EP 2 660 673 A2**
(43) Veröffentlichungstag der Anmeldung: **06.11.2013**
(21) Anmeldenummer: 13002261.9
(22) Anmeldetag: 25.04.2013
(51) Int. Cl.: G05B 19/418

(54) **Computerisierte Zentrale zum konfigurieren von Produktverarbeitungsanlagen**

(30) Priorität: 02.05.2012 CH 612122012
(71) Anmelder: Ferag AG, 8340 Hinwil (CH)
(72) Erfinder: Groth, Uwe, 8340 Hinwil (CH)
(74) Vertreter: Rentsch Partner AG

(57) **Zusammenfassung**

Die Erfindung betrifft eine computerisierte Zentrale (1) zum Konfigurieren von Produktverarbeitungsanlagen (2), welche von der computerisierten Zentrale (1) entfernt angeordnet sind und jeweils ein Steuermodul (27), einen Förderer (24) sowie eine Vielzahl von Zuförderern (23) aufweisen. Das Steuermodul (27) ist eingerichtet, aufgrund von Konfigurationsdaten die Produktverarbeitungsanlage (2) zu steuern, um eine oder mehrere Produktkollektionen zu erstellen aus Produkten (P1-Pn). Ein Empfangsmodul (11) ist eingerichtet, über ein Telekommunikationsnetz Anlagendaten (21) der Produktverarbeitungsanlagen (2) und Kollektionsdaten (22) der einen oder mehreren Produktkollektionen zu empfangen. Ein Produktionsrechenmodul (12) ist eingerichtet, Konfigurationsdaten für eine der Produktverarbeitungsanlagen (2) unter Berücksichtigung der Anlagendaten (21) und der Kollektionsdaten (22) der betreffenden Produktverarbeitungsanlage (2) zu berechnen, wobei die Konfigurationsdaten für die Zuförderer (23) jeweils einen Belegungsplan mit Produkten (P1-Pn) definieren, welche vom Zuförderer (23) zur Erstellung der einen oder mehreren Produktkollektionen dem Förderer (24) der betreffenden Produktverarbeitungsanlage (2) zuzuführen sind. Ein Übermittlungsmodul (13) ist eingerichtet, über das Telekommunikationsnetz die berechneten Konfigurationsdaten an das Steuermodul (27) der Produktverarbeitungsanlage (2) zu übermitteln.

## Beschreibung

### TECHNISCHES GEBIET

Die Erfindung bezieht sich auf eine computerisierte Zentrale und ein computerimplementiertes Verfahren zum Konfigurieren von Produktverarbeitungsanlagen.

### STAND DER TECHNIK

Aus dem Stand der Technik sind Produktverarbeitungsanlagen bekannt, um Produkte mit Zuförderern einem Förderer zuzuführen und durch Zusammentragen, Einstecken oder Sammeln zu Produktkollektionen zusammenzustellen. Bei Druckproduktverarbeitungsanlagen umfassen die Produkte insbesondere flächige Druckprodukte unterschiedlicher Dicke aber auch andere flächige Produkte, wie beispielsweise Datenträger oder andere Beilagen. Die aus den Produkten erstellten Produktkollektionen werden vom Förderer sequentiell einem oder mehreren Weiterverarbeitungsanlagen zugeführt, beispielsweise zum Einstecken, Folieren, Heften, Kleben, Schneiden und/oder Stapeln.

Typischerweise, ist eine Produktverarbeitungsanlage mit einem umlaufenden Förderer ausgeführt. Ein umlaufender Förderer ermöglicht den Transport von Produkten, Produktkollektionen respektive Kollektionsträgern entlang einer geschlossenen Kurve bzw. Bahn zyklisch an den Zuförderern vorbei.

Die Produktverarbeitungsanlagen weisen unterschiedliche Konfigurationen auf, beispielsweise eine unterschiedliche Anzahl Zuförderer, unterschiedliche Geschwindigkeiten des Förderers, etc. Produktkollektionen weisen ebenfalls unterschiedliche Konfigurationen auf, beispielsweise eine unterschiedliche Anzahl zusammengestellter Produkte, eine unterschiedliche Anzahl erforderlicher Exemplare, etc. Zur Produktion von erforderlichen Produktkollektionen wird eine Produktverarbeitungsanlage entsprechend konfiguriert, beispielsweise Produkte bei einem Zuförderer bereitgestellt, die Geschwindigkeit des Förderers eingestellt, etc. Die Konfiguration ist insbesondere an nachfolgende Schritte anzupassen, bei welchen beispielsweise zur Auslieferung z.B. mittels Lastkraftwagen oder anderen Transportfahrzeugen die Produktkollektionen durch Stapelstationen zu Paketen gestapelt und anschliessend umreift werden.

Die Zuförderer müssen vor und während der Produktion durch Bedienpersonal der Produktverarbeitungsanlage manuell mit den zuzuführenden Produkten belegt werden. Die Produkte werden dazu typischerweise auf Paletten zu den Zuförderern herangeführt und vom Bedienpersonal stapel- oder bündelweise von einer Palette dem betreffenden Zuförderer zugeführt.

Bei Produktverarbeitungsanlagen mit einer grossen Anzahl von Zuförderern, beispielsweise mehrere Dutzend oder über hundert, und einer darauf auszuführenden Produktion zur Erstellung mehrerer verschiedenartigen Produktkollektionen aus einer gegebenenfalls noch grösseren Anzahl von verschiedenen zuzuführenden Produkten, beispielsweise über hundert oder mehrere hundert verschiedene Produkte, wird die Produktionszeit bei inneffizienter oder ungünstiger Konfiguration der Produktverarbeitungsanlage beträchtlich verlängert, beispielsweise wenn Neubelegungen von Zuförderern während der Produktion zu Produktionsunterbrüchen führen.

Diese Rüstzeiten und Umrüstzeiten bei den Zuförderern können zu beachtlichen Verzögerungen von vorgesehenen Auslieferungszeitpunkten beitragen. Die Umrüstzeiten fallen typischerweise besonders lang aus, da bestehende Paletten durch neue Paletten ausgewechselt und nicht nur neu Paletten bereitgestellt werden müssen.

### DARSTELLUNG DER ERFINDUNG

Es ist eine Aufgabe der vorliegenden Erfindung eine computerisierte Zentrale und ein computerimplementiertes Verfahren zum Konfigurieren von Produktverarbeitungsanlagen vorzuschlagen, welche zumindest einige Nachteile des Standes der Technik nicht aufweisen. Es ist insbesondere eine Aufgabe der vorliegenden Erfindung eine computerisierte Zentrale und ein computerimplementiertes Verfahren zum Konfigurieren von Produktverarbeitungsanlagen vorzuschlagen, um in einer flexiblen Weise eine sowohl effiziente als auch günstige Konfiguration von Produktverarbeitungsanlagen zu erzielen.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass eine computerisierte Zentrale zum Konfigurieren von Produktverarbeitungsanlagen, welche von der computerisierten Zentrale entfernt angeordnet sind und jeweils ein Steuermodul, einen Förderer sowie eine Vielzahl von Zuförderern aufweisen, wobei das Steuermodul eingerichtet ist, aufgrund von Konfigurationsdaten eine betreffende Produktverarbeitungsanlage zu steuern um eine oder mehrere Produktkollektionen zu erstellen aus von den Zuförderern dem Förderer zugeführten Produkten. Die computerisierte Zentrale umfasst mindestens ein Empfangsmodul, welches eingerichtet ist, über ein Telekommunikationsnetz Anlagendaten der Produktverarbeitungsanlagen und Kollektionsdaten der einen oder mehreren Produktkollektionen zu empfangen. Die computerisierte Zentrale umfasst mindestens ein Produktionsrechenmodul, welches eingerichtet ist, Konfigurationsdaten für eine der Produktverarbeitungsanlagen unter Berücksichtigung der Anlagendaten und der Kollektionsdaten der betreffenden Produktverarbeitungsanlage zu berechnen, wobei die Konfigurationsdaten für die Zuförderer jeweils einen Belegungsplan mit Produkten definieren, welche von Zuförderern zur Erstellung der einen oder mehreren Produktkollektionen dem Förderer der betreffenden Produktverarbeitungsanlage zuzuführen sind. Die computerisierte Zentrale umfasst mindestens ein Übermittlungsmodul, welches eingerichtet ist, über das Telekommunikationsnetz berechnete Konfigurationsdaten an das Steuermodul der betreffenden Produktverarbeitungsanlage zu übermitteln. Die computerisierte Zentrale ist insbesondere derart ausgerüstet, dass die Konfigurationsdaten schnell und effizient berechnet werden können und zu einer sowohl effizienten als auch günstigen Konfiguration von Produktverarbeitungsanlagen führen. Die computerisierte Zentrale ist einfach und schnell an neue Erkenntnisse, neue Anlagenkomponenten oder neue Produktkollektionen anpassbar, um bei der Berechnung von Konfigurationsdaten eine sowohl effiziente als auch günstige Konfiguration von Produktverarbeitungsanlagen zu erhalten.

In einer Ausführungsform ist die computerisierte Zentrale vorgesehen zur Berechnung und Übermittlung von Konfigurationsdaten für mindestens eine Produktverarbeitungsanlage welche für vereinzelbare Produkte eingerichtet ist, insbesondere für flächige, flexible Produkte. Produkte werden als Produktbündel an den Zuförderern bereitgestellt und werden mit Einrichtungen vereinzelt, wobei die Zuförderer vereinzelte Produkte dem Förderer zuführen. In einer Ausführungsvariante erfolgt die Vereinzelung der Produkte mithilfe von Saugergreifern unterschiedlicher, der Produktbeschaffenheit angepasster Typen.

In einer Ausführungsform ist das mindestens eine Produktionsrechenmodul eingerichtet, um zur Berechnung der Konfigurationsdaten anlagenspezifische Daten zu berücksichtigen, die von einem oder mehreren der folgenden Parameter abhängen: Anzahl von Zuförderern, Konfiguration von Zuförderern, Leistungsdaten von Zuförderern, Betriebskosten von Zuförderern, Leistungsdaten eines Förderers, Beschickungsart der Zuförderer. Die Konfigurationsdaten berücksichtigen die aktuellen Konfigurationsmöglichkeiten einer Produktverarbeitungsanlage und gegebenenfalls nachfolgender Weiterverarbeitungsanlagen. Einen hohen Anteil der Betriebskosten der Zuförderer besteht aus Personalkosten. Falls die bei einem Zuförderer bereitgestellten Produkte verhältnismässig gross und schwer sind, kann ein Splitbetrieb oder ein Backupbetrieb von Zufördereren erforderlich sein, um eine genügende Anzahl Produkte dem Förderer zuführen zu können. Dadurch erhöhen sich insbesondere auch aufgrund des zusätzlichen Personals die Betriebskosten. Falls bei mehreren Zuförderern Produkte bereitzustellen sind, welche verhältnismässig leicht sind, kann sich der Aufwand aufgrund des Personals verkleinern, da ggf. eine Person genügt, um mehrere Zuförderer zu bedienen. Die Beschickungsart der Zuförderer umfasst beispielsweise das Beschicken von Bündel per Hand, das Beschicken von Stangen mit Produkten, das Beschicken als Disk oder Scheibe von aufgewickelten Produktschuppen, etc.

In einer Ausführungsform ist das mindestens eine Produktionsrechenmodul eingerichtet, um zur Berechnung der Konfigurationsdaten anlagenspezifische Daten zu berücksichtigen, die von einem oder mehreren der folgenden Zeitparameter abhängen: Tageszeit, Wochentag, Feiertag. Die Konfigurationsdaten berücksichtigen insbesondere von Zeitparameter abhängige Faktoren wie die Produktionskosten.

In einer Ausführungsform ist das mindestens eine Produktionsrechenmodul eingerichtet, um zur Berechnung der Konfigurationsdaten Kollektionsdaten zu berücksichtigen, insbesondere von produktspezifischen Parametern die von einem oder mehreren der folgenden Parameter abhängen: Anzahl von Produktkollektionen, Anzahl Produkte in Produktkollektionen, Anzahl zu produzierende Exemplare von Produktkollektionen, physikalische oder geometrische Eigenschaften der Produkte wie insbesondere magnetische Eigenschaften, Farbe, Dicke, Reihenfolge der Produktion von Produktkollektionen insbesondere zum Einhalten einer Routenreihenfolge bei der Auslieferung. Die Konfigurationsdaten berücksichtigen die erforderlichen Konfigurationen der Produktkollektionen. Das Einhalten einer Routenreihenfolge ist wichtig, da beim Transport nach dem Abladen an einem ersten Zielort die Produktkollektionen für den nächsten Zielort zuerst auf der Transportfläche angeordnet sein sollten, um das Abladen zu beschleunigen, sowie das fehlerhafte Abladen zu vermeiden.

In einer Ausführungsform ist das mindestens eine Produktionsrechenmodul eingerichtet, um zur Berechnung der Konfigurationsdaten eines oder mehrere der folgenden Optimierungskriterien anzuwenden: Produktionskosten, Produktionszeit, Produktionszuverlässigkeit, Stillstandzeit, Platzbedarf der Produkte, Platzbedarf der Produktkollektionen, Anzahl Bewegungen der Produkte, Anzahl Bewegungen der Produktkollektionen, Anzahl Produktwechsel von Zufördereren, Anzahl Personen für die Bedienung der mindestens einen Produktverarbeitungsanlage. Die Konfigurationsdaten sind an eines oder mehrere Optimierungskriterien angepasst und führen zu einer besonders effizienten und günstigen Konfiguration der Produktverarbeitungsanlage.

In einer Ausführungsform ist das mindestens eine Empfangsmodul eingerichtet, um effektive Produktionsdaten mehrerer Produkte betreffend die Produktion von Produktkollektionen zu empfangen, und das mindestens eine Produktionsrechenmodul ist eingerichtet, um zur Berechnung der Konfigurationsdaten effektive Produktionsdaten zu berücksichtigen. Bei der Berücksichtigung von effektiven Produktionsdaten wird sichergestellt, dass Erfahrungswerte beim Betrieb von Produktverarbeitungsanlagen bei der Berechnung der Konfigurationsdaten einfliessen.

In einer Ausführungsform ist das mindestens eine Empfangsmodul eingerichtet, um Änderungsvorgaben betreffend die Konfigurationsdaten zu empfangen, und das mindestens eine Produktionsrechenmodul ist eingerichtet, um zur Berechnung der Konfigurationsdaten Änderungsvorgaben zu berücksichtigen. Die Änderungsvorgaben können beispielsweise vom Bedienpersonal separat vorgegeben werden, beispielsweise nachdem das Bedienpersonal Konfigurationsdaten überprüft und darin wünschbare Änderungen festgestellt hat.

In einer Ausführungsform ist das mindestens eine Produktionsberechnungsmodul eingerichtet, um eine oder mehrere Konfigurationsvorgaben betreffend die Produktverarbeitungsanlage zu ermitteln, und das mindestens eine Übermittlungsmodul ist eingerichtet, die eine oder mehreren Konfigurationsvorgaben an eine Überwachungseinheit der Produktverarbeitungsanlage zu übermitteln. Durch das Überwachen von Konfigurationsvorgaben kann beispielsweise die Zuverlässigkeit beim Betrieb der Produktverarbeitungsanlage gewährleistet werden.

Neben einer computerisierten Zentrale bezieht sich die Erfindung auf ein computerimplementiertes Verfahren zum Konfigurieren von Produktverarbeitungsanlagen, welche von einer computerisierten Zentrale entfernt angeordnet sind und jeweils ein Steuermodul, einen Förderer sowie eine Vielzahl von Zuförderern aufweisen, wobei das Steuermodul eingerichtet ist, aufgrund von Konfigurationsdaten eine betreffende Produktverarbeitungsanlage zu steuern um eine oder mehrere Produktkollektionen zu erstellen aus von den Zuförderern dem Förderer zugeführten Produkten. Das Verfahren umfasst: Empfangen über ein Telekommunikationsnetz in einer computerisierten Zentrale von Anlagendaten der Produktverarbeitungsanlagen und von Kollektionsdaten der einen oder mehreren Produktkollektionen, Berechnen in der computerisierten Zentrale von Konfigurationsdaten für eine der Produktverarbeitungsanlagen unter Berücksichtigung der Anlagendaten und der Kollektionsdaten der betreffenden Produktverarbeitungsanlage, wobei die Konfigurationsdaten für die Zuförderer jeweils einen Belegungsplan mit Produkten definieren, welche vom Zuförderer zur Erstellung der einen oder mehreren Produktkollektionen dem Förderer der betreffenden Produktverarbeitungsanlage zuzuführen sind, und Übermitteln der berechneten Konfigurationsdaten von der computerisierten Zentrale über das Telekommunikationsnetz an das Steuermodul der betreffenden Produktverarbeitungsanlage.

In einer Variante werden von der computerisierten Zentrale zur Berechnung der Konfigurationsdaten Anlagendaten berücksichtigt, die von einem oder mehreren der folgenden Parameter abhängen: Anzahl von Zuförderern, Konfiguration von Zuförderern, Leistungsdaten von Zuförderern, Betriebskosten von Zuförderern, Leistungsdaten eines Förderers, Beschickungsart der Zuförderer.

In einer Variante werden von der computerisierten Zentrale zur Berechnung der Konfigurationsdaten Anlagendaten berücksichtigt, die von einem oder mehreren der folgenden Zeitparameter abhängen: Tageszeit, Wochentag, Feiertag.

In einer Variante werden von der computerisierten Zentrale zur Berechnung der Konfigurationsdaten Kollektionsdaten berücksichtigt, die von einem oder mehreren der folgenden Parameter abhängen: Anzahl von Produktkollektionen, Anzahl Produkte in Produktkollektionen, physikalische oder geometrische Eigenschaften der Produkte wie insbesondere magnetische Eigenschaften, Farbe, Dicke, Anzahl zu produzierende Exemplare von Produktkollektionen, Reihenfolge der Produktion von Produktkollektionen insbesondere zum Einhalten einer Routenreihenfolge bei der Auslieferung.

In einer Variante werden von der computerisierten Zentrale zur Berechnung der Konfigurationsdaten eines oder mehrere der folgenden Optimierungskriterien angewendet: Produktionskosten, Produktionszeit, Produktionszuverlässigkeit, Stillstandzeit, Platzbedarf der Produkte, Platzbedarf der Produktkollektionen, Anzahl Bewegungen der Produkte, Anzahl Bewegungen der Produktkollektionen, Anzahl Produktwechsel von Zufördereren, Anzahl Personen für die Bedienung der mindestens einen Produktverarbeitungsanlage.

In einer Variante werden von der computerisierten Zentrale effektive Produktionsdaten mehrerer Produkte betreffend die Produktion von Produktkollektionen empfangen, und es werden von der computerisierten Zentrale zur Berechnung der Konfigurationsdaten effektive Produktionsdaten berücksichtigt.

In einer Variante werden von der computerisierten Zentrale Änderungsvorgaben betreffend die Konfigurationsdaten empfangen, und es werden von der computerisierten Zentrale zur Berechnung der Konfigurationsdaten Änderungsvorgaben berücksichtigt.

In einer Variante werden von der computerisierten Zentrale eine oder mehrere Konfigurationsvorgaben betreffend die Produktverarbeitungsanlage ermittelt, und es werden von der computerisierten Zentrale die eine oder mehreren Konfigurationsvorgaben an eine Überwachungseinheit der Produktverarbeitungsanlage übermittelt.

Neben einer computerisierten Zentrale und einem computerimplementierten Verfahren bezieht sich die Erfindung auf ein Computerprogrammprodukt, umfassend ein greifbares computerlesbares Speichermedium mit gespeichertem Computercode, welcher eingerichtet ist, einen oder mehrere Prozessoren einer computerisierten Zentrale zu steuern zur Konfiguration von Produktverarbeitungsanlagen, welche von der computerisierten Zentral entfernt angeordnet sind und jeweils ein Steuermodul, einen Förderer sowie eine Vielzahl von Zuförderern aufweist, wobei das Steuermodul eingerichtet ist, aufgrund von Konfigurationsdaten eine betreffende Produktverarbeitungsanlage zu steuern um eine oder mehrere Produktkollektionen zu erstellen aus von den Zuförderern dem Förderer zugeführten Produkten.

Der Computercode steuert die computerisierte Zentrale so, dass: Anlagendaten der Produktverarbeitungsanlagen und Kollektionsdaten der einen oder mehreren Produktkollektionen über ein Telekommunikationsnetz empfangen werden, Konfigurationsdaten für eine der Produktverarbeitungsanlagen unter Berücksichtigung der Anlagendaten und der Kollektionsdaten der betreffenden Produktverarbeitungsanlage berechnet werden, wobei die Konfigurationsdaten für die Zuförderer jeweils einen Belegungsplan mit Produkten definieren, welche vom Zuförderer zur Erstellung der einen oder mehreren Produktkollektionen dem Förderer der betreffenden Produktverarbeitungsanlage zuzuführen sind, und die berechneten Konfigurationsdaten über das Telekommunikationsnetz an das Steuermodul der betreffenden Produktverarbeitungsanlage übermittelt werden.

In besonders vorteilhafter Weise ist die erfindungsgemässe Lösung in der Druckweiterverarbeitung also insbesondere bei Druckproduktverarbeitungsanlagen anwendbar. Bei Anlagen in der Druckweiterverarbeitung handelt es sich um sehr grosse und komplexe Anordnungen, welche oft mit Komponenten verschiedener Anbieter ausgerüstet sind. Mit der erfindungsgemässen Lösung kann auch für diese komplexen und grossen Anlagen eine Konfiguration bestimmt werden, welche zu einem sowohl effizienten als auch günstigen Produktionsablauf bei der Herstellung von beispielsweise Druckproduktkollektionen führen. Da Anlagen im Bereich der Druckweiterverarbeitung häufig, d.h. manchmal täglich oder sogar stündlich, um konfiguriert werden, ist mit der erfindungsgemässen Lösung stets eine Konfiguration bestimmbar, welche dem Rechnung trägt und wodurch sich stets eine sowohl effiziente als auch günstige Konfiguration bei Anlagen der Druckweiterverarbeitung ergibt.

In einer Ausführungsvariante ist eine computerisierte Zentrale eingerichtet zum Konfigurieren von Produktverarbeitungsanlagen, welche von der computerisierten Zentrale entfernt angeordnet sind und jeweils ein Steuermodul, einen Förderer sowie eine Vielzahl von Zuförderern aufweisen, wobei das Steuermodul eingerichtet ist, die betreffende Produktverarbeitungsanlage aufgrund von Konfigurationsdaten zu steuern um eine oder mehrere Produktkollektionen aus von den Zuförderern dem Förderer zugeführten Produkten zu erstellen. Die computerisierte Zentrale umfasst: ein Empfangsmodul, welches eingerichtet ist, über ein Telekommunikationsnetz Konfigurationsaufträge für Produktverarbeitungsanlagen zu empfangen, welche Konfigurationsaufträge jeweils Anlagendaten von einer der Produktverarbeitungsanlagen und Kollektionsdaten der einen oder mehreren durch die betreffende Produktverarbeitungsanlage zu erstellenden Produktkollektionen umfassen, ein Produktionsrechenmodul, welches eingerichtet ist, für die Konfigurationsaufträge jeweils Konfigurationsdaten für eine der Produktverarbeitungsanlagen unter Berücksichtigung der Anlagendaten und der Kollektionsdaten der betreffenden Produktverarbeitungsanlage zu berechnen, wobei die Konfigurationsdaten für die Zuförderer der betreffenden Produktverarbeitungsanlage jeweils einen Belegungsplan mit Produkten definieren, welche von den Zuförderern zur Erstellung der einen oder mehreren Produktkollektionen dem Förderer der betreffenden Produktverarbeitungsanlage zuzuführen sind, und ein Übermittlungsmodul, welches eingerichtet ist, die für die Konfigurationsaufträge berechneten Konfigurationsdaten jeweils über das Telekommunikationsnetz an das Steuermodul der bereffenden Produktverarbeitungsanlage zu übermitteln. Die Konfigurationsaufträge umfassen beispielsweise eine Datenstruktur, welche Anlagendaten und Kollektionsdaten enthält sowie z.B. eine Zieladresse der computerisierten Zentrale und/oder eine Absenderadresse der betreffenden Produktverarbeitungsanlage. Aufgrund der Absenderadresse ist nach der Berechnung der Konfigurationsdaten die Übermittlung an die entsprechende Produktverarbeitungsanlage sichergestellt. Die Konfigurationsaufträge können einer Priorität aufweisen, nach welcher diese abzuarbeiten sind. Aus der Priorität kann beispielsweise abgeleitet werden, zu welchen Kosten das Konfigurieren einer Produktionsanlage abgerechnet wird.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: eine computerisierte Zentrale zum Konfigurieren von Produktverarbeitungsanlagen;
- Fig. 2: eine Produktverarbeitungsanlage mit einer ersten und einer zweiten Sektion mit Zuförderern;
- Fig. 3: eine Produktverarbeitungsanlage mit einer einzelnen Sektion mit Zuförderern; und
- Fig. 4: ein Flussdiagram mit einer Sequenz möglicher Schritte für das Konfigurieren von Produktverarbeitungsanlagen.

### WEG(E) ZUR AUSFÜHRUNG DER ERFINDUNG

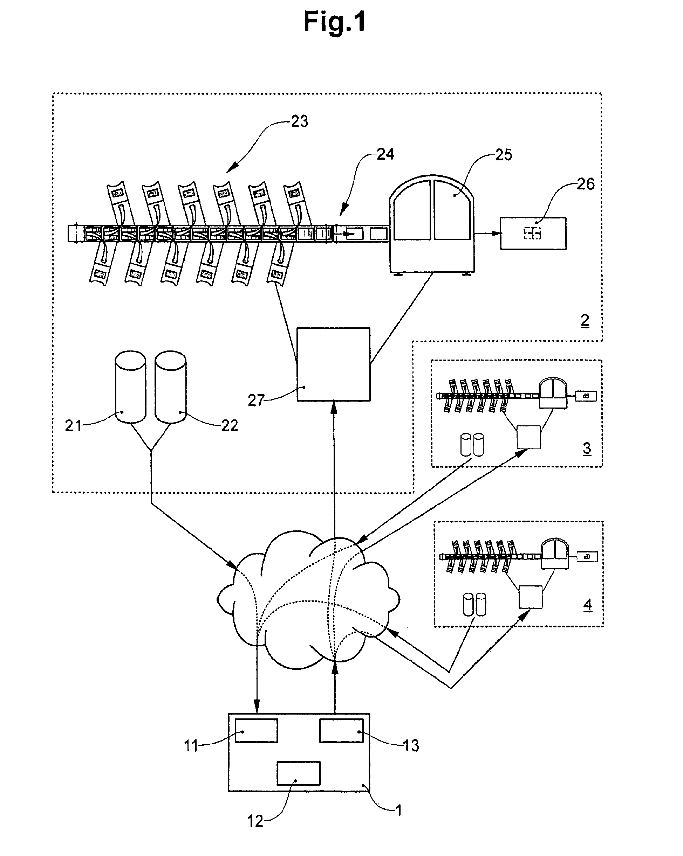

Figur 1 zeigt schematisch eine Produktverarbeitungsanlage 2, insbesondere eine Druckproduktverarbeitungsanlage, welche ein Steuermodul 27, einen Förderer 24 und eine Vielzahl von Zuförderern 23 aufweist und zur Erstellung von einer oder mehreren Produktkollektionen, insbesondere von Druckproduktkollektionen, aus von den Zuförderern 23 zugeführten Produkten eingerichtet ist. Die Produktkollektionen umfassen verschiedene Produktarten, insbesondere Druckprodukte wie Prospekte, Magazine, Zeitungen, etc. und/oder andere flächige, flexible Produkte wie Datenträger, z.B. CDs, DVDs, Bluray Discs, Datenspeicherkarten, Warenmuster, z.B. Beutelsuppen oder Teebeutel, Briefpost, verpackte Textilien, flexible Anzeigegeräte, z.B. E-Paper, etc.

Die Produktverarbeitungsanlage 2 umfasst beispielsweise mehrere Dutzend oder über hundert Zuförderer 23. Je nach Anwendung sind beispielsweise in einem Splitbetrieb mehrere Zuförderer 23 mit dem gleichen Produkt belegt, z.B. bei dicken Produkten, bei welchen die manuelle Bestückung eines einzelnen Zuförderers 23 durch das Bedienpersonal der Produktverarbeitungsanlage 2 nicht in der erforderlichen Geschwindigkeit durchgeführt werden kann, damit für eine unterbruchsfreie Produktion der einen oder mehreren Produktkollektionen eine pausenlose Zuführung der Produkte zum Förderer 24 gewährleistet ist. In einer Ausführungsform sind mehrere Zuförderer 23 vorgesehen um einen Backup zu gewährleisten, damit bei einem allfälligen Ausfall eines Zuförderers 23 die unterbruchsfreie Produktion einer Produktkollektion gewährleistet ist. Typischerweise ist die Anzahl unterschiedlicher Produkte, welche für die Produktion mehrerer oder aller Produktkollektionen erforderlich sind, grösser als die Anzahl der Zuförderer 23 der Produktverarbeitungsanlage 2.

In Figur 1 sind weitere entsprechende Produktverarbeitungsanlagen 3, 4 schematisch dargestellt.

In einer Ausführungsform ist die Produktverarbeitungsanlage 2 mit einem umlaufenden Förderer 24 ausgerüstet. Ein umlaufender Förderer 24 ermöglicht den Transport von Produkten, Produktkollektionen resp. Kollektionsträgern entlang einer geschlossenen Kurve bzw. Bahn zyklisch an den Zuförderern 23 vorbei. Generell können bestimmte Produkte resp. Produktkollektionen so mehrere Zyklen auf dem umlaufenden Förderer 24 durchlaufen, so dass der Prozess des Zusammentragens mehrfach ausgeführt werden kann, insbesondere beim fehlerbehaften Zusammentragen von Produkten.

In einer Ausführungsform umfasst der Förderer 24 mehrere seriell angeordnete Kollektionsträger, wie beispielsweise Greifer, Sockel, Taschen oder Sattel, welche entlang einer geschlossenen Linie zyklisch an den Zuförderern 23 vorbeigeführt werden. Die Kollektionsträger sind eingerichtet, um die von den Zuförderern 23 zugeführten Produkte aufzunehmen. Die Produkte werden von den Zuförderern 23 in einer erforderlichen Reihenfolge den Kollektionsträgern zugeführt und zu Produktkollektionen zusammengestellt.

In einer Ausführungsform umfasst die Produktverarbeitungsanlage 2 eine oder mehrere Weiterverarbeitungsanlagen 25, 26. In einer Variante ist dem Förderer 24 eine Einstecktrommel 25 nachgeschaltet zum Einstecken der Produktkollektionen, welche beispielsweise von einem separaten Zuförderer zugeführt werden, in ein Hauptprodukt. In einer Variante ist dem Förderer 24 eine Verpackungsanlage 26 nachgeschaltet, welche eingerichtet ist, Produktkollektionen zu sammeln und zu verpacken. In einer Variante umfassen die Weiterverarbeitungsanlagen 25, 26 eine oder mehrere der folgenden Anlagen: eine Stapelstation, eine Folieranlage, eine Anlage zum Heften, eine Anlage zum Schneiden, eine Anlage zum Kleben, eine Anlage zum Aufdrucken oder Aufkleben von Zusatzinformationen wie beispielsweise Name und Adresse.

Das Steuermodul 27 der Produktverarbeitungsanlage 2 ist für Steuerungsaufgaben eingerichtet und über Kommunikationsverbindungen wie beispielsweise Datenleitungen insbesondere mit den Zuförderern 23, dem Förderer 24 und den Weiterverarbeitungsanlagen 25, 26 der Produktverarbeitungsanlage 2 verbunden. In einer Ausführungsform ist das Steuermodul 27 für Überwachungsaufgaben eingerichtet. In einer Variante ist das Steuermodul 27 eingerichtet, um Konfigurationsdaten zu empfangen und den Ablauf der Produktion von Produktkollektionen mit der Produktverarbeitungsanlage 2 aufgrund der Konfigurationsdaten zu steuern, wobei beispielsweise die Zuförderer 23 ein- oder ausgeschaltet werden, dem Bedienpersonal signalisiert wird, welche Produkte bei welchem Zuförderer bereitgestellt oder nachgefüllt werden müssen, der Förderer 24 ein- oder ausgeschaltet wird, eine Geschwindigkeit der Zuförderer 23 oder des Förderers 24 eingestellt wird, etc.

Die Konfigurationsdaten, welche insbesondere Konfigurationsdaten der Zuförderer 23 betreffen, definieren beispielsweise die Anzahl und die Art der Produkte, welche einem Zuförderer 23 zugeordnet sind, den Zeitpunkt des Wechsels von Produkten eines Zuförderers 23, der Wechsel von Ausrüstungen eines Zuförderes 23 wie des Typs eines Saugergreifers zum Ansaugen und Zuführen von Produkten, etc.

Das Steuermodul 27 umfasst beispielsweise ein Computersystem, welches einen oder mehrere Prozessoren, eine oder mehrere Kommunikationsschnittstellen zur Datenübertragung, eine Anzeigeeinheit wie z.B. einen Bildschirm, eine Eingabeeinheit wie z.B. eine Tastatur und eine Maus oder einen berührungsempfindlichen Bildschirm aufweist. Das Steuermodul 27 umfasst mehrere Funktionsmodule, welche vorzugsweise als programmierte Softwaremodule ausgeführt sind und Computerprogrammcode umfassen zur Steuerung der Prozessoren eines Computersystems. Der Computerprogrammcode ist auf einem oder mehreren fest oder entfernbar mit den Prozessoren verbundenen computerlesbaren Speichermedien gespeichert. Der Fachmann wird jedoch verstehen, dass die Funktionsmodule in alternativen Ausführungsvarianten teilweise oder vollständig durch Hardwarekomponenten ausgeführt werden können.

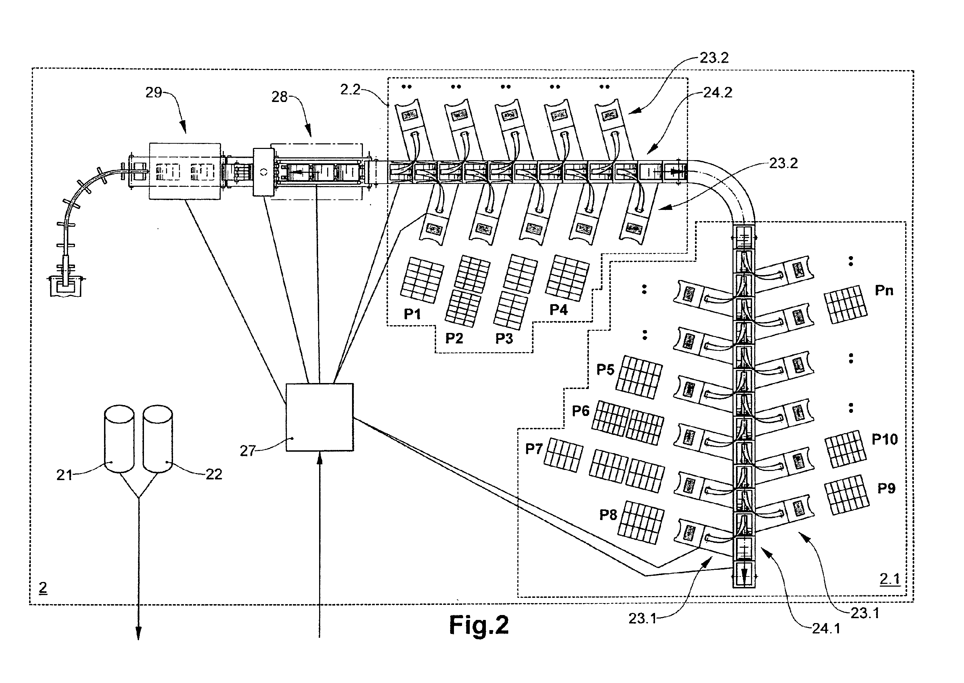

Figur 2 zeigt schematisch eine Produktverarbeitungsanlage 2 zur Erstellung von einer oder mehreren Produktkollektionen, welche aus einem oder mehreren Produkten P1, P2, P3, P4, P5, P6, P7, P8, P9, P10, Pn, kurz aus Produkten P1-Pn, zusammenzustellen sind. Wie in Figur 2 schematisch dargestellt, sind beispielsweise Zuförderer 23.1 und ein Förderer 24.1 einer 1. Sektion sowie Zuförderer 23.2 und ein Förderer 24.2 einer 2. Sektion vorgesehen. In einer Variante werden die eine oder die mehreren Produktkollektionen in der 1. Sektion durch zusammenstellen mit ersten Produkten P5, P6, P7, P8, P9, P10, Pn, kurz mit den Produkten P5-Pn, und in der 2. Sektion durch zusammenstellen mit zweiten Produkten P1, P2, P3, P4, kurz mit den Produkten P1-P4, erstellt. Es kann somit zunächst beispielsweise ein erster Teil einer Produktkollektion erstellt werden, welche z.B. aus einer ersten Menge von Produkten P9, P10, Pn, P1, P2, P3, P4 zusammengestellt ist, während anschliessend beispielsweise die Produktkollektion fertiggestellt wird, indem z.B. Produkte aus einer zweiten Menge von Produkten P8, P7, P6, P5, P1, P2, P3, P4 zugeführt werden.

Die Produktkollektionen sind aufgrund von Kollektionsdaten 22 definiert, welche insbesondere die Anzahl Produktkollektionen, die Reihenfolge der Produktkollektionen, die Produkte P1-Pn und die Reihenfolge der Produkte P1-Pn einer Produktkollektion, die Anzahl Exemplare einer Produktkollektion, etc. definieren. Durch die Kollektionsdaten 22 sind eine Vielzahl von Merkmalen von Produktkollektionen definiert, welche beim Betrieb einer Produktverarbeitungsanlage 2 herzustellen sind.

In einem Beispiel umfassen Produktkollektionen eine Zusammenstellung aus einem Wochenmagazin als erstes Produkt P1 und einem Werbeflyer eines lokalen Frischmarktes , wobei eine erste Produktkollektion mit dem Werbeflyer eines ersten Frischmarkts, eine zweite Produktkollektion mit dem Werbeflyer eines zweiten Frischmarkts, etc. zusammenzustellen sind. Beim Betrieb der Produktverarbeitungsanlage 2 werden in einem ersten Zeitfenster Exemplare mit ersten Produktkollektionen zusammengestellt, welche den Werbeflyer des ersten Frischmarkts enthalten. In weiteren Zeitfenstern werden Exemplare mit zweiten Produktkollektionen, dritten Produktkollektionen und vierten Produktkollektionen zusammengestellt, welche den Werbeflyer des zweiten Frischmarkts, des dritten Frischmarkts, etc. enthalten. In einem Beispiel werden mit der Produktverarbeitungsanlage 2 z.B. je 100'000 Exemplaren der ersten, zweiten, dritten und vierten Produktkollektion mit demselben Wochenmagazin und je dem Werbeflyer eines ersten, zweiten, dritten und vierten Frischmarkts zusammengestellt. Die je 100'000 Exemplare werden anschliessend in die lokale Umgebung des entsprechenden Frischmarkts transportiert und dort verteilt oder verkauft. Die Reihenfolge der Erstellung der jeweils 100'000 Exemplare kann beispielsweise entsprechend der Distanz zwischen der Produktverarbeitungsanlage 2 und des jeweiligen Frischmarkts erfolgen, so dass die lokale Umgebung des am weitest entfernten Frischmarkts beispielsweise ungefähr zu derselben Zeit mit den 100'000 Exemplaren beliefert werden kann wie die lokalen Umgebungen der anderen Frischmärkte. In einer Variante kann die Reihenfolge der Erstellung der jeweils 100'000 Exemplare gemäss einem Auslieferungsplan erfolgen, so dass in einem Lastwagen, welcher die lokalen Umgebungen der jeweiligen Frischmärkte gemäss einer Auslieferungsroute beliefert, die entsprechenden 100'000 Exemplare sich jeweils zuvorderst auf der Ladefläche befinden.

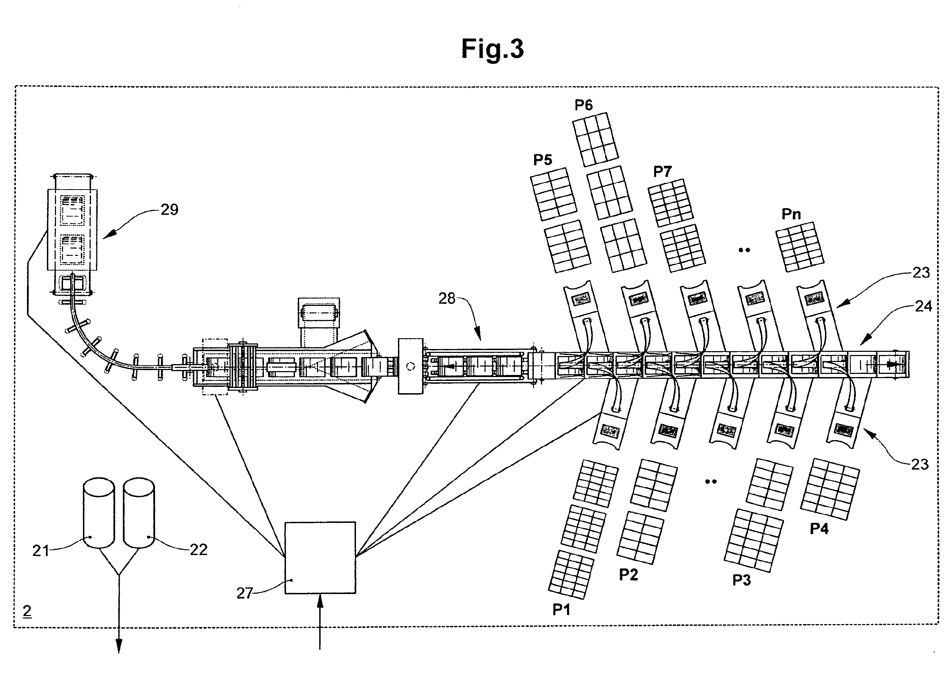

Figur 3 zeigt schematisch eine Produktverarbeitungsanlage 2 zur Erstellung von einer oder mehreren Produktkollektionen, welche aus einem oder mehreren Produkten P1, P2, P3, P4, P5, P6, P7, Pn, kurz aus Produkten P1-Pn, zusammengestellt sind. Die Produktverarbeitungsanlage 2 gemäss Figur 3 weist im Gegensatz zu der in Figur 2 dargestellten Produktverarbeitungsanlage 2 nur eine einzelne Sektion mit mehreren Zuförderer 23 und einem Förderer 24 auf, um aus den Produkten P1-Pn eine oder mehrere Produktkollektionen zu erstellen.

Die in Figur 1, Figur 2 und Figur 3 dargestellten Beispiele von Produktverarbeitungsanlagen 2 sind entsprechend deren Ausgestaltungen, welche beispielsweise unterschiedliche Zuförderer 23, Förderer 24, oder Weiterverarbeitungsanlagen 24, 25 umfassen, durch unterschiedliche Anlagedaten 21 definiert. Die Anlagendaten 21 definieren anlagenspezifische Daten der Produktverarbeitungsanlage 2, wie beispielsweise die Anzahl Sektionen mit betriebsbereiten Förderern 24, 24.1, 24.2 und betriebsbereiten Zuförderern 23, 23.1, 23.2, die Konfiguration der Zuförderer 23, 23.1, 23.2 wie beispielsweise der installierte oder der installierbare Typ eines Saugergreifers eines Zuförderers 23, 23.1, 23.2, die Produktionsgeschwindigkeit welche z.B. 27'000 Takte/h betragen kann, die erwartete oder durchschnittliche zeitliche Dauer eines Produktionsunterbruchs, beispielsweise 1 - 5 Minuten, etc.

Damit die Produktverarbeitungsanlage 2 eingerichtet ist, um ganz unterschiedliche Produkte zu verarbeiten, ist insbesondere der Saugergreifer eines Zuförderers 23, 23.1, 23.2 entsprechend dem zuzuführenden Produkt einzustellen oder der Saugergreifer ist gegen einen anderen Typ auszuwechseln. In einer Ausführungsvariante sind die Saugergreifer der Zuförderer 23, 23.1, 23.2 auswechselbar. So kann ein Saugergreifer des Typs 1 für Glanzbeilagen vorgesehen sein, insbesondere bei dicken Produktkollektionen oder Beilagen mit einer Seitenzahl von mehr als z.B. 32 Seiten. Ein Saugergreifer des Typs 2 kann für Zeitungspapier vorgesehen sein, wobei der Saugergreifer vom Typ 2 teuer und langlebig ausgeführt ist. Ein Saugergreifer des Typs 3 kann ebenfalls für Zeitungspapier vorgesehen sein, wobei der Saugergreifer des Typs 3 kostengünstig und nicht so langlebig ausgeführt ist. In einer Weiterentwicklung kann der Saugergreifer des Typs 3 kostengünstig und langlebig ausgeführt sein und den Saugergreifer des Typs 2 ersetzen. Ein Saugergreifer des Typs 4 kann für dünne Beilagen von 1, 2 oder 4 Seiten vorgesehen sein, wobei der Saugergreifer des Typs 4 für hohe Geschwindigkeiten eingerichtet ist. Ein Saugergreifer des Typs 5 kann für dünne Beilagen von 1, 2 oder 4 Seiten vorgesehen sein, wobei der Saugergreifer des Typs 5 für tiefe bis mittlere Geschwindigkeiten eingerichtet ist. Ein Saugergreifer des Typs 6 kann für stabile Produkte wie z.B. CDs, Karten, etc. vorgesehen sein.

Um eine hohe Zuverlässigkeit bei der Zuführung von Produkten durch die Zuförderer 23 zu erreichen, ist es erforderlich, den entsprechenden Zuförderer 23 mit dem entsprechenden Saugergreifer auszurüsten. Die Kollektionsdaten 22 umfassen in entsprechender Weise die notwendigen Angaben über die Produkte, also ob es sich um dicke oder dünne Produkte, um Glanzbeilagen oder Zeitungsbeilagen, etc. handelt. Die Anlagendaten 21 umfassen in entsprechender Weise die notwendigen Angaben über die Zuförderer 23 und die Saugergreifer, mit welchen diese Zuförderer ausgerüstet werden können.

Wie in Figur 1 schematisch dargestellt, weist eine computerisierte Zentrale 1 ein Empfangsmodul 11 auf, welches eingerichtet ist, um Anlagendaten 21 und Kollektionsdaten 22 zu empfangen. In einer Variante sind die Anlagendaten 21 und die Kollektionsdaten 22 jeweils in Konfigurationsaufträgen zusammengefasst, welche als strukturierter Datensätze beispielsweise eine Zieladresse der computerisierten Zentrale 1 und eine Absenderadresse einer Produktverarbeitungsanlage 2 enthalten. In einer Ausführungsform sind die Anlagendaten 21, die Kollektionsdaten 22 und/oder die Konfigurationsaufträge in strukturierten Datensätzen abgespeichert, beispielsweise gemäss einem XML Format (XML: eXtended Markup Language), welche über eine Kommunikationsverbindung, beispielsweise über eine Datenverbindung gemäss einem IP Protokoll (IP: Internet Protocol), von einem in der lokalen Umgebung der Produktverarbeitungsanlage 2 angeordneten Datenspeicher, an die computerisierte Zentrale 1 übermittelt werden. Dazu ist beispielsweise ein in der lokalen Umgebung der Produktverarbeitungsanlage 2 angeordnetes lokales Computersystem mit der computerisierten Zentrale 1 über eine Internetverbindung verbunden. Die computerisierte Zentrale 1 bildet somit aus der Sicht von einer Vielzahl lokaler Computersysteme von Produktverarbeitungsanlagen 2 eine Umgebung in der Art eines "Cloud Computing". Die computerisierte Zentrale 1 steht also wie in Figur 1 schematisch dargestellt insbesondere einer Vielzahl von Produktverarbeitungsanlagen 2, 3, 4 zur Verfügung.

In einer Ausführungsvariante umfasst ein Konfigurationsauftrag die Anlagedaten 21 einer betreffenden Produktverarbeitungsanlage 2 sowie die Kollektionsdaten 22, nach welchen von der betreffenden Produktverarbeitungsanlage 2 Produktkollektionen P1-Pn herzustellen sind. Ein Konfigurationsauftrag enthält beispielsweise eine Zieladresse einer computerisierten Zentrale 1, um die korrekte Übermittlung des Konfigurationsauftrags über ein Telekommunikationsnetzwerk zu gewährleisten. Ein Konfigurationsauftrag enthält ferner beispielsweise eine Adresse einer betreffenden Produktverarbeitungsanlage 2, um die korrekte Übermittlung von Konfigurationsdaten an die betreffende Produktverarbeitungsanlage 2 zu gewährleisten. Die Zieladressen können beispielsweise als IP Adressen, als E-mail Adressen oder in einer anderen Weise ausgeführt sein. Ein Konfigurationsauftrag umfasst beispielsweise eine Priorität und die computerisierte Zentrale ist z.B. eingerichtet, um Konfigurationsaufträge entsprechend der jeweiligen Priorität abzuarbeiten. Dadurch lässt sich die Auslastung der computerisierten Zentrale 1 steuern und es kann auch eine Kostenabrechnung entsprechend der Priorität erfolgen. In einer Ausführungsvariante erfolgt die Kostenabrechnung aufgrund der von der computerisierten Zentrale 1 benötigen Ressourcen, wie z.B. CPU Zeit, Speicherbedarf, etc. um die Konfigurationsdaten für einen Konfigurationsauftrag zu berechnen.

Wie in Figur 1 schematisch dargestellt, weist die computerisierte Zentrale 1 ein Produktionsberechnungsmodul 12 auf, welches eingerichtet ist, um Konfigurationsdaten für die Produktionsverarbeitungsanlage 2 unter Berücksichtigung der Anlagendaten 21, der Kollektionsdaten 22 und/oder der Konfigurationsaufträgen zu berechnen. Die Konfigurationsdaten definieren für die Zuförderer 23 jeweils einen Belegungsplan mit Produkten P1-Pn, welche vom Zuförderer zur Erstellung der einen oder mehreren Produktkollektionen dem Förderer 24 zuzuführen sind. Zur Berechnung der Konfigurationsdaten weist das Produktionsberechnungsmodul 12 erforderliche Berechnungsroutinen auf. Die Berechnungsroutinen sind beispielsweise derart eingerichtet, dass die Konfigurationsdaten eine Belegung der Zuförderer definieren, welche zu einer minimalen Standzeit der Produktionsverarbeitungsanlage 2 führt. Eine minimale Standzeit wird insbesondere dadurch erreicht, dass die Zuförderer 23 stets eine genügende Anzahl Produkte für die Zuförderung zum Förderer 24 aufweisen.

Falls bei der Produktion von Produktkollektionen ein Wechsel eines Produkts eines Zuförderers 23 erforderlich ist, dann ist die unterbruchsfreie Produktion nur dann gewährleistet, wenn einer der Zuförderer 23 nicht benötigt wird und für das Umrüsten für ein neues Produkt frei ist. In diesem Fall kann die Produktion mit dem neuen Produkt durch Umrüsten eines freien Zuförderers 23 mit dem neuen Produkt und anschliessendem einschalten dieses Zuförderers 23 ohne Produktionsunterbrechung durchgeführt werden. Falls jedoch alle Zuförderer 23 belegt sind und ein nicht mehr benötigtes Produkt durch ein neues Produkt ersetzt werden muss, dann ist eine Unterbrechung der Produktion nicht vermeidbar. Bei der Berechnung der Konfigurationsdaten berücksichtigt das Produktionsberechnungsmodul diesen Umstand.

In einer Variante berücksichtigen die Berechnungsroutinen eines oder mehrere der folgenden Optimierungskriterien: Produktionskosten, Produktionszeit, Produktionszuverlässigkeit, Stillstandzeit, Platzbedarf der Produkte, Platzbedarf der Produktkollektionen, Anzahl Bewegungen der Produkte, Anzahl Bewegungen der Produktkollektionen, Anzahl Produktwechsel von Zufördereren. Minimale Produktionskosten werden beispielsweise durch die Auswahl von kostengünstigen Produktionszeiten, also insbesondere während normalen Arbeitszeiten unter der Woche, erreicht. Eine minimale Produktionszeit wird beispielsweise durch Einstellen der Maximalgeschwindigkeit der Zuförderer 23 und des Förderers 24 erreicht. Eine maximale Produktionszuverlässigkeit und/oder eine minimale Stillstandzeit wird beispielsweise durch einen parallelen, redundanten Betrieb von Zuförderern erreicht. Ein minimaler Platzbedarf der Produkte P1-Pn wird beispielsweise durch eine exakte Angabe der erforderlichen Produktmengen erreicht. Ein minimaler Platzbedarf von Produktkollektionen wird beispielsweise durch Stapeln der Produktkollektionen erreicht. Eine minimale Anzahl Bewegungen der Produkte P1-Pn wird beispielsweise durch Vermeidung von unnötigen Produktwechsel bei Zuförderern 23 erreicht. Eine minimale Anzahl Bewegungen der Produktkollektionen wird beispielsweise durch eine Wahl der Reihenfolge der Produktion von Produktkollektionen erreicht, so dass die Produktkollektionen nach der Produktion nicht mehr umgestellt werden müssen, beispielsweise für den Transport in einem Lastwagen. Eine minimale Anzahl Produktwechsel von Zuförderern 23 wird beispielsweise durch die geschickte Auswahl der Reihenfolge bei der Produktion von Produktkollektionen erreicht.

Zur Berechnung der Konfigurationsdaten weist das Produktionsberechnungsmodul 23 Berechnungsroutinen auf, welche für eine oder mehrere der folgenden Berechnungsmethoden eingerichtet sind: lineare Programmierung, Verfahren der nächstliegenden Nachbarn "Nearest Neighbours", genetische Algorithmen, etc. Dem Fachmann sind ferner weitere Berechnungsmethoden bekannt, mit welchen unter Berücksichtigung der Anlagendaten 21 und der Kollektionsdaten 22 die Konfigurationsdaten berechnet werden können.

In einer Ausführungsvariante ist das Produktionsrechenmodul 12 eingerichtet, zur Berechnung der Konfigurationsdaten Anlagendaten 21 zu berücksichtigen, die einen oder mehrere der folgenden Parameter umfassen: Anzahl von Zuförderern 23, Konfiguration von Zuförderern 23, Leistungsdaten von Zuförderern 23, Betriebskosten von Zuförderern 23. Unter Berücksichtigung der Anzahl der Zuförderer 23 kann beispielsweise die Produktionszuverlässigkeit optimiert werden, indem eines oder mehrere Produkte P1-Pn parallel von zwei oder mehreren Zuförderern 23 zugeführt werden, so dass bei einem Ausfall eines Zuförderes 23 die unterbruchsfreie Produktion durch ein Umschalten auf einen Zuförderer mit demselben Produkt gewährleistet ist. Unter Berücksichtigung der Konfiguration von Zuförderern kann gewährleistet werden, dass beispielsweise ein Produkt mit einer glatten Oberfläche einem dafür geeigneten Zuförderer zugeteilt wird. Unter Berücksichtigung von Leistungsdaten von Zuförderern kann gewährleistet werden, dass beispielsweise ein dickes Produkt einem dafür geeigneten Zuförderer zugeteilt wird. Unter Berücksichtigung der Betriebskosten von Zuförderern, welche sowohl die Vorrichtung an sich als auch die Personalkosten beinhalten, kann gewährleistet werden, dass beispielsweise die Verarbeitungskosten gesenkt werden indem Zuförderer 23 mit geringen Betriebskosten gegenüber Zuförderer 23 mit hohen Betriebskosten bevorzugt werden.

In einer Ausführungsvariante ist das Produktionsrechenmodul 12 eingerichtet, um zur Berechnung der Konfigurationsdaten Anlagedaten 21 zu berücksichtigen, die von einem oder mehreren der folgenden Zeitparameter abhängen: Tageszeit, Wochentag, Feiertag. Bei der Produktion von Produktkollektionen müssen Zuförderer vom Bedienpersonal regelmässig mit Produkten nachgefüllt werden. Ausserhalb von normalen Arbeitszeiten, also z.B. am Abend, in der Nacht, am Wochenende, an Feiertagen, ist dem Bedienpersonal ein höheres Gehalt zu zahlen, als zu normalen Arbeitszeiten unter der Woche. So können Produktkollektionen, welche beispielsweise wegen einer hohen Dringlichkeit zu einem höheren Preis verkauft werden können, zu Randzeiten oder während der Nacht produziert werden. Dagegen können Produktkollektionen, welche beispielsweise in kleinerer Stückzahl die mehr Arbeitsaufwand benötigen, zu normalen Arbeitszeiten hergestellt werden.

In einer Ausführungsvariante ist das Produktionsrechenmodul 12 eingerichtet, um zur Berechnung der Konfigurationsdaten Kollektionsdaten 22 zu berücksichtigen, die von einem oder mehreren der folgenden Parameter abhängen: Anzahl von Produktkollektionen, Anzahl Produkte P1-Pn in Produktkollektionen, Anzahl zu produzierende Exemplare von Produktkollektionen, Reihenfolge der Produktion von Produktkollektionen. Die Anzahl von Produktkollektionen, welche in einer Arbeitswoche produziert werden, kann beispielsweise mehrere Dutzend betragen. Die Anzahl Produkte P1-Pn in den Produktkollektionen kann beispielsweise mehrere Dutzend betragen, z.B. 60. Die Anzahl Exemplare von Produktkollektionen kann beispielsweise mehrere Zehntausend, Hunderttausend oder Millionen betragen, z.B. 100'000. Die Reihenfolge der Produktion von Produktionskollektionen kann beispielsweise durch die Dringlichkeit oder aus logistischen Gründen wie z.B. der Auslieferungsroute oder der Ladeordnung eines Lastwagens bestimmt sein. Selbstverständlich können die Kollektionsdaten 22 weitere Angaben betreffend die zu produzierenden Produktkollektionen enthalten.

Wie in Figur 1 schematisch dargestellt, weist die computerisierte Zentrale 1 ein Übermittlungsmodul 13 auf, welches eingerichtet ist zur Übermittlung der Konfigurationsdaten an das Steuermodul 27 der Produktverarbeitungsanlage 2. Nachdem die Konfigurationsdaten unter Berücksichtigung der Anlagendaten 21, der Kollektionsdaten 22 und/oder von Konfigurationsaufträgen bestimmt sind, werden diese an das Steuermodule 27 der Produktverarbeitungsanlage 2 übermittelt. Das Steuermodul 27 ist eingerichtet, um aufgrund der empfangenen Konfigurationsdaten die Produktion von Produktkollektionen zu steuern. In einer Ausführungsvariante ist das Steuermodul 27 ferner eingerichtet, die Produktion von Produktkollektionen zu überwachen, also z.B. die aktuelle Anzahl Exemplare einer Produktkollektion zu überprüfen.

Die Funktionsmodule der computerisierten Zentrale 1, insbesondere das Empfangsmodul 11, das Produktionsrechenmodul 12 und das Übermittlungsmodul 13, sind vorzugsweise als programmierte Softwaremodule ausgeführt, welche Computerprogrammcode umfassen zur Steuerung von einem oder mehreren Prozessoren eines oder mehrerer Computer. Der Computerprogrammcode ist auf einem oder mehreren fest oder entfernbar mit den Prozessoren verbundenen (greifbaren) computerlesbaren Speichermedien gespeichert. Der Fachmann wird jedoch verstehen, dass die Funktionsmodule in alternativen Ausführungsvarianten teilweise oder vollständig durch Hardwarekomponenten ausgeführt werden können.

In einer Ausführungsvariante betrifft die computerisierte Zentrale 1 einen Cluster mit einer Vielzahl von Computern, insbesondere einen dezentralen Cluster. Der Cluster kann beispielsweise Computer umfassen, welche von verschiedenen Herstellern von Komponenten der Produktverarbeitungsanlage betrieben werden und welche insbesondere bei der Berechnung von Konfigurationsdaten für eine Produktverarbeitungsanlage 2 derart zusammenwirken, dass eine sowohl effiziente als auch günstige Konfiguration der Produktionsverarbeitungsanlage 2 bestimmt wird. So können von den unterschiedlichen Herstellern beispielsweise Angaben betreffend die Komponenten wie beispielsweise eine maximale Betriebsgeschwindigkeit stets auf einem aktuellen Stand gehalten werden. Dadurch verbessert sich die Konfiguration einer Produktverarbeitungsanlage 2 erheblich.

Das Steuermodul 27 ist mit den Zuförderern 23, 23.1, 23.2 über Kommunikationsverbindungen verbunden, so dass die Zuförderer 23, 23.1, 23.2 gemäss erforderlichem Produktionsablauf zur Produktion von Produktkollektionen z.B. ein- oder ausgeschaltet werden können, die Geschwindigkeit eingestellt werden kann, etc.

Ferner weist das Steuermodul 27 beispielsweise eine Signalisierungsroutine auf, mit welcher dem Bedienpersonal der Zuförderer 23, 23.1, 23.2 die Belegung der Zuförderer mit Produkten, das Wechseln eines Saugergreifers eines Zuförderers 23, 23.1, 23.2, etc. signalisiert werden kann. Die Signalisierung kann beispielsweise über entsprechende Mitteilungen erfolgen, welche auf einer bei einem Zuförderer 23, 23.1, 23.2 angeordneten Anzeige dargestellt wird. In einer Ausführungsvariante erfolgt die Signalisierung über Mitteilungen welche auf einer Anzeige dargestellt werden, die in einem Überwachungsbüro eines Betriebschefs der Produktionsanlage 2 angeordnet ist. In einer weiteren Ausführungsvariante erfolgt die Signalisierung über Mitteilungen welche auf portablen Geräten dargestellt werden, die dem Betriebspersonal zur Verfügung stehen.

Das Steuermodul 27 ist mit den Förderer 24, 24.1, 24.2 über Kommunikationsverbindungen verbunden, so dass die Förderer 24, 24.1, 24.2 gemäss erforderlichem Produktionsablauf zur Produktion von Produktkollektionen z.B. ein- oder ausgeschaltet werden können, die Geschwindigkeit eingestellt werden kann, etc. Das Steuermodul 27 ist über Kommunikationsverbindungen mit Weiterverarbeitungsanlagen 25, 26 verbunden, um das Stapeln, das Folieren, das Verpacken, das Beschriften, etc. von hergestellten Produktkollektionen zu steuern.

In einer Ausführungsvariante ist das Empfangsmodul 11 der computerisierten Zentrale 1 eingerichtet, um effektive Produktionsdaten betreffend die Produktion von Produktkollektionen zu empfangen. Das Produktionsrechenmodul 12 ist eingerichtet, um zur Berechnung der Konfigurationsdaten effektive Produktionsdaten zu berücksichtigen. Bei der Produktion von Produktkollektionen können effektive Produktionsdaten wie Anzahl Störungen der Zuförderer 23, Anzahl und Dauer von Verzögerungen beim Wechsel von Produkten bei einem Zuförderer 23, etc. erfasst werden. Aus den effektiven Produktionsdaten kann beispielsweise abgeleitet werden, welche Kombination von Produkten P1-Pn mit Zuförderern 23 zu verhältnismässig häufigen Störungen führen. Bei der Berechnung von Konfigurationsdaten können beispielsweise bestimmte Kombinationen von Produkten P1-Pn mit Zuförderern 23 vermieden werden.

In einer Ausführungsvariante ist das Empfangsmodul 11 eingerichtet, um Änderungsvorgaben betreffend die Konfigurationsdaten zu empfangen. Das Produktionsrechenmodul 12 ist eingerichtet, um zur Berechnung der Konfigurationsdaten Änderungsvorgaben zu berücksichtigen. Änderungsvorgaben können beispielsweise vom Bedienpersonal über eine Kommunikationsschnittstelle zur computerisierten Zentral 1 eingegeben werden, beispielsweise nachdem Konfigurationsdaten vom Steuermodul 27 der Produktverarbeitungsanlage 2 empfangen wurde und vom Bedienpersonal begutachtet wurde. So kann es dem Bedienpersonal aus individuellen Gründen wie beispielsweise einer krankheitsbedingten Leistungsreduktion von Bedienpersonen zu riskant sein, ein bestimmtes Produkt nur durch einen einzelnen Zuförderer 23 zur Verfügung zu stellen, da das Risiko zu gross eingeschätzt wird, dass eine Störung nicht im üblichen Zeitrahmen behoben werden könnte. Die Änderungsvorgaben können aufgrund irgendwelcher dem Bedienpersonal individuell bekannter Vorgaben erfolgen. Aufgrund der Änderungsvorgaben werden durch das Produktionsrechenmodul 12 entsprechend angepasste Konfigurationsdaten berechnet und durch das Übermittlungsmodul 13 an das Steuermodul 27 übermittelt. Dieser Prozess kann auch iterativ erfolgen und mehrere Durchläufe mit jeweils neuen Änderungsvorgaben und entsprechend berechneten Konfigurationsdaten betreffen.

In einer Ausführungsvariante ist das Produktionsberechnungsmodul 12 eingerichtet, um eine oder mehrere Konfigurationsvorgaben betreffend die Produktverarbeitungsanlage 2 zu ermitteln. Das Übermittlungsmodul 13 ist eingerichtet, die eine oder mehreren Konfigurationsvorgaben an eine Überwachungseinheit der Produktverarbeitungsanlage 2 zu übermitteln. Die Überwachungseinheit ist in einer Variante im Steuermodul 27 enthalten. Konfigurationsvorgaben können die Ausrüstung von Zuförderer 23 mit einem bestimmten Typ eines Saugergreifers betreffen. Falls die Überwachungseinheit ermittelt, dass Konfigurationsvorgaben nicht eingehalten sind, dann kann beispielsweise eine entsprechende Meldung dem Bedienpersonal der Produktverarbeitungsanlage 2 zur Anzeige gebracht werden oder im Falle von betriebszuverlässigkeitsrelevanten Konfigurationsvorgaben wie beispielsweise Betriebsbereitschaft eines Zuförderers einer maximalen Geschwindigkeit des Förderers 24 kann eine Abschaltung der Produktverarbeitungsanlage 2 ausgelöst werden.

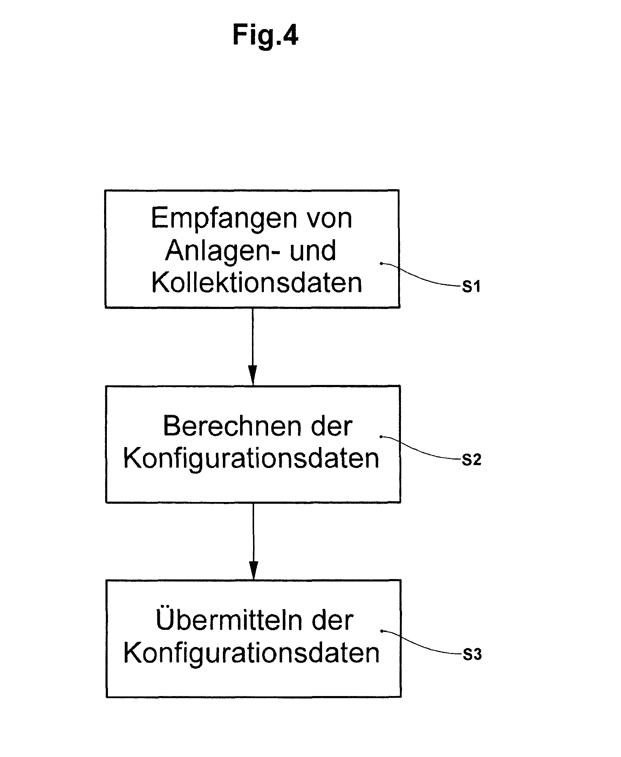

Figur 4 zeigt ein Flussdiagram mit einer Sequenz möglicher Schritte zur Berechnung und Übermittlung von Konfigurationsdaten für mindestens eine Produktverarbeitungsanlage 2. In Schritt S1 werden in einer computerisierten Zentrale 1 Anlagendaten 21 empfangen von mindestens einer Produktverarbeitungsanlage 2 sowie von Kollektionsdaten 22 der einen oder mehreren Produktkollektionen. In Schritt S2 werden in der computerisierten Zentrale 1 die Konfigurationsdaten für die mindestens eine Produktverarbeitungsanlage 2 berechnet unter Berücksichtigung der Anlagendaten 21 und der Kollektionsdaten 22, wobei die Konfigurationsdaten für die Zuförderer 23 jeweils einen Belegungsplan mit Produkten P1-Pn definieren, welche vom Zuförderer 23 zur Erstellung der einen oder mehreren Produktkollektionen dem Förderer 24 zuzuführen sind. In Schritt S3 werden von der computerisierten Zentrale 1 die Konfigurationsdaten an das Steuermodul 27 der mindestens einen Produktverarbeitungsanlage 2 übermittelt.

## Patentansprüche

1. Eine computerisierte Zentrale (1) zum Konfigurieren von Produktverarbeitungsanlagen (2), welche von der computerisierten Zentrale (1) entfernt angeordnet sind und jeweils ein Steuermodul (27), einen Förderer (24) sowie eine Vielzahl von Zuförderern (23) aufweisen, wobei das Steuermodul (27) eingerichtet ist, aufgrund von Konfigurationsdaten eine betreffende Produktverarbeitungsanlage (2) zu steuern um eine oder mehrere Produktkollektionen zu erstellen aus von den Zuförderern (23) dem Förderer (24) zugeführten Produkten (P1-Pn), die computerisierte Zentrale (1) umfassend:
mindestens ein Empfangsmodul (11), welches eingerichtet ist, über ein Telekommunikationsnetz Anlagendaten (21) der Produktverarbeitungsanlagen (2) und Kollektionsdaten (22) der einen oder mehreren Produktkollektionen zu empfangen,
mindestens ein Produktionsrechenmodul (12), welches eingerichtet ist, Konfigurationsdaten für eine der Produktverarbeitungsanlagen (2) zu berechnen unter Berücksichtigung der Anlagendaten (21) und der Kollektionsdaten (22) der betreffenden Produktverarbeitungsanlage (2), wobei die Konfigurationsdaten für die Zuförderer (23) jeweils einen Belegungsplan mit Produkten (P1-Pn) definieren, welche von Zuförderern (23) zur Erstellung der einen oder mehreren Produktkollektionen dem Förderer (24) der betreffenden Produktverarbeitungsanlage (2) zuzuführen sind, und
mindestens ein Übermittlungsmodul (13), welches eingerichtet ist, über das Telekommunikationsnetz berechnete Konfigurationsdaten an das Steuermodul (27) der betreffenden Produktverarbeitungsanlage (2) zu übermitteln.

2. Die computerisierte Zentrale (1) nach Anspruch 1, vorgesehen zur Berechnung und Übermittlung von Konfigurationsdaten für mindestens eine Produktverarbeitungsanlage welche für vereinzelbare Produkte eingerichtet ist, insbesondere für flächige, flexible Produkte.

3. Die computerisierte Zentrale (1) nach Anspruch 1 oder 2, **dadurch gekennzeichnet, dass** das mindestens eine Produktionsrechenmodul (12) eingerichtet ist, um zur Berechnung der Konfigurationsdaten anlagenspezifische Daten (21) zu berücksichtigen, die von einem oder mehreren der folgenden Parameter abhängen: Anzahl von Zuförderern (23), Konfiguration von Zuförderern (23), Leistungsdaten von Zuförderern (23), Betriebskosten von Zuförderern (23), Leistungsdaten eines Förderers (24), Beschickungsart der Zuförderer (23).

4. Die computerisierte Zentrale (1) nach einem der Ansprüche 1 bis 3, **dadurch gekennzeichnet, dass** das mindestens eine Produktionsrechenmodul (12) eingerichtet ist, um zur Berechnung der Konfigurationsdaten Anlagendaten (21) zu berücksichtigen, die von einem oder mehreren der folgenden Zeitparameter abhängen: Tageszeit, Wochentag, Feiertag.

5. Die computerisierte Zentrale (1) nach einem der Ansprüche 1 bis 4, **dadurch gekennzeichnet, dass** das mindestens eine Produktionsrechenmodul (12) eingerichtet ist, um zur Berechnung der Konfigurationsdaten Kollektionsdaten (22) zu berücksichtigen, die von einem oder mehreren der folgenden Parameter abhängen: Anzahl von Produktkollektionen, Anzahl Produkte (P1-Pn) in Produktkollektionen, physikalische oder geometrische Eigenschaften der Produkte wie insbesondere magnetische Eigenschaften, Farbe, Dicke, Anzahl zu produzierende Exemplare von Produktkollektionen, Reihenfolge der Produktion von Produktkollektionen insbesondere zum Einhalten einer Routenreihenfolge bei der Auslieferung.

6. Die computerisierte Zentrale (1) nach einem der Ansprüche 1 bis 5, **dadurch gekennzeichnet, dass** das mindestens eine Produktionsrechenmodul (12) eingerichtet ist, um zur Berechnung der Konfigurationsdaten eines oder mehrere der folgenden Optimierungskriterien anzuwenden: Produktionskosten, Produktionszeit, Produktionszuverlässigkeit, Stillstandzeit, Platzbedarf der Produkte (P1-Pn), Platzbedarf der Produktkollektionen, Anzahl Bewegungen der Produkte (P1-Pn), Anzahl Bewegungen der Produktkollektionen, Anzahl Produktwechsel von Zufördereren (23), Anzahl Personen für die Bedienung der mindestens einen Produktverarbeitungsanlage (2).

7. Die computerisierte Zentrale (1) nach einem der Ansprüche 1 bis 6, **dadurch gekennzeichnet, dass** das mindestens eine Empfangsmodul (11) eingerichtet ist, um effektive Produktionsdaten mehrerer Produkte betreffend die Produktion von Produktkollektionen zu empfangen, und das mindestens eine Produktionsrechenmodul (12) ist eingerichtet, um zur Berechnung der Konfigurationsdaten effektive Produktionsdaten zu berücksichtigen.

8. Die computerisierte Zentrale (1) nach einem der Ansprüche 1 bis 7, **dadurch gekennzeichnet, dass** das mindestens eine Empfangsmodul (11) eingerichtet ist, um Änderungsvorgaben betreffend die Konfigurationsdaten zu empfangen, und das mindestens eine Produktionsrechenmodul (12) ist eingerichtet ist, um zur Berechnung der Konfigurationsdaten Änderungsvorgaben zu berücksichtigen.

9. Die computerisierte Zentrale (1) nach einem der Ansprüche 1 bis 8, **dadurch gekennzeichnet, dass** das mindestens eine Produktionsberechnungsmodul (12) eingerichtet ist, um eine oder mehrere Konfigurationsvorgaben betreffend die Produktverarbeitungsanlage (2) zu ermitteln, und das mindestens eine Übermittlungsmodul (13) ist eingerichtet, die eine oder mehreren Konfigurationsvorgaben an eine Überwachungseinheit der Produktverarbeitungsanlage (2) zu übermitteln.

10. Ein computerimplementiertes Verfahren zum Konfigurieren von Produktverarbeitungsanlagen (2), welche von einer computerisierten Zentrale (1) entfernt angeordnet sind und jeweils ein Steuermodul (27), einen Förderer (24) sowie eine Vielzahl von Zuförderern (23) aufweisen, wobei das Steuermodul (27) eingerichtet ist, aufgrund von Konfigurationsdaten eine betreffende Produktverarbeitungsanlage (2) zu steuern um eine oder mehrere Produktkollektionen zu erstellen aus von den Zuförderern (23) dem Förderer (24) zugeführten Produkten (P1-Pn), das Verfahren umfassend:
Empfangen über ein Telekommunikationsnetz in einer computerisierten Zentrale (1) von Anlagendaten (21) der Produktverarbeitungsanlagen (2) und von Kollektionsdaten (22) der einen oder mehreren Produktkollektionen,
Berechnen in der computerisierten Zentrale (1) von Konfigurationsdaten für eine der Produktverarbeitungsanlagen (2) unter Berücksichtigung der Anlagendaten (21) und der Kollektionsdaten (22) der betreffenden Produktverarbeitungsanlage (2), wobei die Konfigurationsdaten für die Zuförderer (23) jeweils einen Belegungsplan mit Produkten (P1-Pn) definieren, welche vom Zuförderer (23) zur Erstellung der einen oder mehreren Produktkollektionen dem Förderer (24) der betreffenden Produktverarbeitungsanlage (2) zuzuführen sind, und
Übermitteln der berechneten Konfigurationsdaten von der computerisierten Zentrale (1) über das Telekommunikationsnetz an das Steuermodul (27) der betreffenden Produktverarbeitungsanlage (2).

11. Das Verfahren nach Anspruch 10, **dadurch gekennzeichnet, dass** von der computerisierten Zentrale (1) zur Berechnung der Konfigurationsdaten Anlagendaten (21) berücksichtigt werden, die von einem oder mehreren der folgenden Parameter abhängen: Anzahl von Zuförderern (23), Konfiguration von Zuförderern (23), Leistungsdaten von Zuförderern (23), Betriebskosten von Zuförderern (23), Leistungsdaten eines Förderers (24), Beschickungsart der Zuförderer (23).

12. Das Verfahren nach Anspruch 10 oder 11, **dadurch gekennzeichnet, dass** von der computerisierten Zentrale (1) zur Berechnung der Konfigurationsdaten Anlagendaten (21) berücksichtigt werden, die von einem oder mehreren der folgenden Zeitparameter abhängen: Tageszeit, Wochentag, Feiertag.

13. Das Verfahren nach einem der Ansprüche 10 bis 12, **dadurch gekennzeichnet, dass** von der computerisierten Zentrale (1) zur Berechnung der Konfigurationsdaten Kollektionsdaten (22) berücksichtigt werden, die von einem oder mehreren der folgenden Parameter abhängen: Anzahl von Produktkollektionen, Anzahl Produkte (P1-Pn) in Produktkollektionen, physikalische oder geometrische Eigenschaften der Produkte wie insbesondere magnetische Eigenschaften, Farbe, Dicke, Anzahl zu produzierende Exemplare von Produktkollektionen, Reihenfolge der Produktion von Produktkollektionen insbesondere zum Einhalten einer Routenreihenfolge bei der Auslieferung.

14. Das Verfahren nach einem der Ansprüche 10 bis 13, **dadurch gekennzeichnet, dass** von der computerisierten Zentrale (1) zur Berechnung der Konfigurationsdaten eines oder mehrere der folgenden Optimierungskriterien angewendet werden: Produktionskosten, Produktionszeit, Produktionszuverlässigkeit, Stillstandzeit, Platzbedarf der Produkte (P1-Pn), Platzbedarf der Produktkollektionen, Anzahl Bewegungen der Produkte (P1-Pn), Anzahl Bewegungen der Produktkollektionen, Anzahl Produktwechsel von Zufördereren (23)), Anzahl Personen für die Bedienung der mindestens einen Produktverarbeitungsanlage (2).

15. Das Verfahren nach einem der Ansprüche 10 bis 14, **dadurch gekennzeichnet, dass** von der computerisierten Zentrale (1) effektive Produktionsdaten mehrerer Produkte betreffend die Produktion von Produktkollektionen empfangen werden, und wobei von der computerisierten Zentrale (1) zur Berechnung der Konfigurationsdaten effektive Produktionsdaten berücksichtigt werden.

16. Das Verfahren nach einem der Ansprüche 10 bis 15, **dadurch gekennzeichnet, dass** von der computerisierten Zentrale (1) Änderungsvorgaben betreffend die Konfigurationsdaten empfangen werden, und wobei von der computerisierten Zentrale (1) zur Berechnung der Konfigurationsdaten Änderungsvorgaben berücksichtigt werden.

17. Das Verfahren nach einem der Ansprüche 10 bis 16, **dadurch gekennzeichnet, dass** von der computerisierten Zentrale (1) eine oder mehrere Konfigurationsvorgaben betreffend die Produktverarbeitungsanlage (2) ermittelt werden, und wobei von der computerisierten Zentrale (1) die eine oder mehreren Konfigurationsvorgaben an eine Überwachungseinheit der Produktverarbeitungsanlage (2) übermittelt werden.

18. Ein Computerprogrammprodukt, umfassend ein greifbares computerlesbares Speichermedium mit gespeichertem Computercode, welcher eingerichtet ist, einen oder mehrere Prozessoren einer computerisierten Zentrale (1) zu steuern zur Konfiguration von Produktverarbeitungsanlagen (2), welche von der computerisierten Zentrale (1) entfernt angeordnet sind und jeweils ein Steuermodul (27), einen Förderer (24) sowie eine Vielzahl von Zuförderern (23) aufweist, wobei das Steuermodul (27) eingerichtet ist, aufgrund von Konfigurationsdaten eine betreffende Produktverarbeitungsanlage (2) zu steuern um eine oder mehrere Produktkollektionen zu erstellen aus von den Zuförderern (23) dem Förderer (24) zugeführten Produkten (P1-Pn), wobei der Computercode die computerisierte Zentrale (1) so steuert, dass:
Anlagendaten (21) der Produktverarbeitungsanlagen (2) und Kollektionsdaten (22) der einen oder mehreren Produktkollektionen über eine Telekommunikationsnetz empfangen werden,
Konfigurationsdaten für eine der Produktverarbeitungsanlagen (2) unter Berücksichtigung der Anlagendaten (21) und der Kollektionsdaten (22) der betreffenden Produktverarbeitungsanlage (2) berechnet werden, wobei die Konfigurationsdaten für die Zuförderer (23) jeweils einen Belegungsplan mit Produkten (P1-Pn) definieren, welche vom Zuförderer (23) zur Erstellung der einen oder mehreren Produktkollektionen dem Förderer (24) der betreffenden Produktverarbeitungsanlage (2) zuzuführen sind, und
die berechneten Konfigurationsdaten über ein Telekommunikationsnetz an das Steuermodul (27) der betreffenden Produktverarbeitungsanlage (2) übermittelt werden.
